# EUROPEAN PATENT SPECIFICATION

(11) **EP 0 485 164 B1**
(45) Date of publication and mention of the grant of the patent: **29.01.1997**
(21) Application number: 91310213.3
(22) Date of filing: 05.11.1991
(51) Int. Cl.: H04N 7/14, H04L 5/14

(54) **Bidirectional signal transfer apparatus**
Bidirektionales Signalübertragungsgerät
Dispositif de transfert bidirectionnel de signaux

(30) Priority: 08.11.1990 JP 304318/90
(43) Date of publication of application: 13.05.1992
(73) Proprietor: MATSUSHITA ELECTRIC INDUSTRIAL CO., LTD., Kadoma-shi, Osaka-fu, 571 (JP)
(72) Inventor: Ohta, Kazuo, Sagemihara-shi (JP)
(74) Representative: Smith, Norman Ian

(56) References cited:
- US-A- 3 845 240
- US-A- 3 943 283
- PATENT ABSTRACTS OF JAPAN vol. 11, no. 152 (E-507) 16 May 1987 & JP-A-61 287 390
- INTERNATIONAL SYMPOSIUM ON CIRCUITS AND SYSTEMS, PROCEEDINGS, Kyoto, 5th-7th June 1985, vol. 3, pp. 1489-1492; H. YASUKAWA et al.: "Voice-band bothway repeater using echo cancellers for automatic call-transfer service"
- PATENT ABSTRACTS OF JAPAN vol. 9, no. 318 (E-366) 13 December 1985 & JP-A-60 152 153

## Description

### BACKGROUND OF THE INVENTION

### 1. Field of the Invention

The present invention relates to a bidirectional signal transfer apparatus in which bidirectional transferring of a data signal over a single signal line, which also carries a video signal, can be performed between appliances and in which saving of lines improves the extending property of a system.

### 2. Description of the Related Art

Conventionally, when it is intended to obtain pieces of mutual information bidirectionally set on one signal line for the purpose of saving lines, there has been considered a system for converting the pieces of information into carriers different from each other.

In the foregoing system, however, there has been a problem in that it is necessary to separately prepare apparatuses for converting the respective pieces of information into carriers so that the system becomes large in size, particularly in the case where control of various functions is to be performed while displaying the same video information at a plurality of places, specifically, for example, when a video signal is to be monitored, or in the case of a system in which any one of video signals from a plurality of places is selected.

JP-A-61 287 390 discloses a system for bidirectional data transmission over a single line. Two video signals (A+B) are transmitted in added form over a cable. A station A subtracts its own video signal A to obtain the second video signal B.

### SUMMARY OF THE INVENTION

It is therefore an object of the present invention to solve such a problem in the conventional technique.

It is another object of the present invention to provide a bidirectional signal transfer apparatus in which information input/output between appliances can be made possible through a single signal line without using any carrier so that connection between the appliances can be made easily.

In order to attain the foregoing objects, in the bidirectional signal transfer apparatus according to the present invention, a circuit in which an amplifier is arranged so that the amplifier provides an output to an appliance which is a target of connection with this apparatus while provides an input when this apparatus is viewed from an appliance which is a target of connection with this apparatus is provided at each connection terminal of this apparatus, whereby the contents of data multiplexed in advance in a flyback period of a video signal which is inputted/outputted through each terminal are judged, so that a video signal, a synchronizing signal, a data signal, etc. can be sent out in desired directions and injection of necessary data can be injected again.

In the above configuration, bidirectional signal transfer can be performed by using a single signal line without using any carrier.

### BRIEF DESCRIPTION OF THE DRAWINGS

Fig. 1 is a block diagram schematically showing an embodiment of the bidirectional signal transfer apparatus according to the present invention; and
Fig. 2 is a block diagram specifically showing the configuration of the same apparatus more in detail.

### DESCRIPTION OF THE PREFERRED EMBODIMENT

Referring to the accompanying drawings, an embodiment of the present invention will be described below.

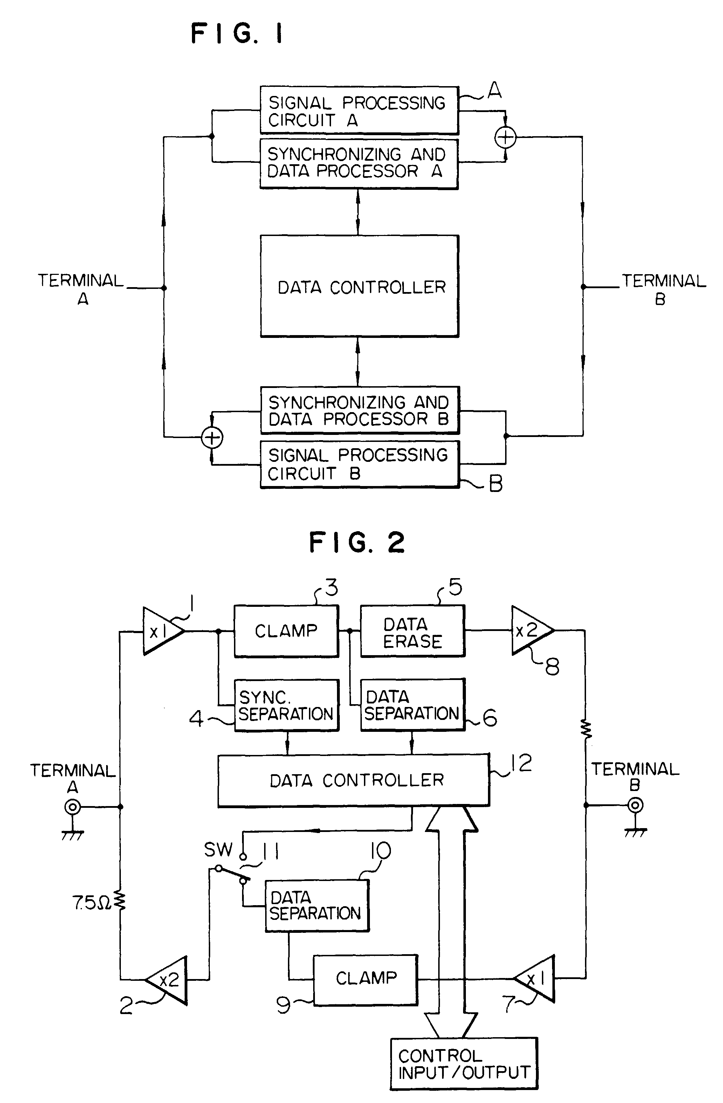

Fig. 1 is a block diagram for explaining the outline of the present invention.

In Fig. 1, each of terminals A and B is used as an input/output terminal for a video signal in which communication data are injected in a video blanking period. Each of signal processing circuits A and B serves to separate a communication data portion from a video signal portion in a video signal so that an unnecessary signal is erased while a new signal is injected. Each of synchronizing and data processing portions A and B serves to perform the specific operation of the signal processing circuit. That is, the synchronizing and data processing portion performs synchronizing separation on a video signal supplied thereto and sends the signal to a data control portion on one hand, and the synchronizing and data processing portion performs control to erase a video signal or inject a new signal on the basis of data supplied from the data control portion on the other hand.

In the above configuration, when a video signal on which communication data are multiplexed is sent from the terminal A to the terminal B and at the same time a video signal on which communication data different from the first-mentioned communication data are multiplexed is sent from the terminal B to the terminal A, the video signal to be sent from the terminal A to the terminal B is grasped by the signal processing circuit A and the synchronizing and data processing portion A so that the signal from the terminal A which has reached the terminal B is prevented from being transferred from the terminal B to the terminal A again.

That is, information as to the video signal to be sent from the terminal A to the terminal B is sent from the data control portion to the synchronizing and data processing portion B so that in the signal processing circuit B, operation to erase a video signal sent from the terminal A to the terminal B among video signals sent from the terminal B to the terminal A.

Referring to Fig. 2, the operation when a video signal is transferred from the terminal A to the terminal B will be described below more specifically.

Fig. 2 shows a specific configuration of an embodiment of the present invention. In Fig. 2, the reference numeral 1 designates a buffer circuit having high input impedance and 2 designates a buffer circuit 2 having low output impedance, the buffer circuit 2 being connected to a terminal A of the appliance through a line terminating resistor of 75 Ω. The reference numeral 3 designates a clamping circuit for clamping a video signal and for supplying the clamped video signal to a data erasing portion 5 and a data separating portion 6. The reference numerals 7 and 8 desingate buffer circuits 7 and 8 which are similar to the buffer circuits 1 and 2, and the input of the buffer circuit 7 is connected to a terminal B of the appliance. The reference numeral 4 designates a synchronizing separation portion for separating a synchronizing signal from a video signal and for supplying a timing signal to a data control portion 12. The output of the buffer circuit 7 is processed by a clamping portion 9 and a data separating portion 10 in the same manner as in the clamping portion 3 and the data erasing portion 5, and the thus processed output is applied to the input of the buffer circuit 2 through a switch 11.

Next, operation of this embodiment will be described. The input of a video signal to be applied to the buffer circuit 1 is terminated with a resistance of 75 Ω because of the low output impedance of the buffer circuit 2, and therefore the input and output of the terminal A are terminated with 75 Ω. Similarlly to this, the terminal B is configured by means of the buffer circuits 7 and 8. The impedance viewed from each of the terminals A and B is therefore kept to be 75 Ω. Next, the video signal is clamped by the clamping portion 3 so that the data signal multiplexed in flyback period is separated by the data separating portion 6, and the thus obtained data signal is sent to the data control portion 12.

Further, the data signal in the clamped video signal is erased in the data erasing portion 5, and the thus processed video signal is transferred to the buffer circuit 8 so as to be sent to the terminal B with the output impedance of 75 Ω. Moreover, in the case where another appliance having the same configuration is connected in the succeeding stage, a signal applied from the terminal B is multiplexed on the output of the amplifier portion 8, and therefore the data signal from the succeeding stage can be separated by the clamping portion 9 and the data separating portion 10 through the same processing as performed in the clamping portion 3 and the data separating portion 6.

Though the data signal is separated from the thus processed signal, the thus processed signal is multiplexed with a video signal which has been supplied from the appliance in the preceding stage and which has been sent from the terminal A to the terminal B. Accordingly, an erasing signal is applied from the data control portion 12 to the multiplexed unnecesary signal so that a signal obtained by inverting the video signal which has been transferred from the switch 11 or the terminal A to the terminal B is added to the processed signal to thereby cancel the unnecessary signal. Further, in the case of multiplexing data from this appliance, the switch 11 is switched to the side where data are outputted from the data control portion 12 so that the data can be sent to the front/rear appliance connected to this appliance in accordance with a requirement. Multiplexing phases of data from the appliances connected to the terminals A and B are set so as to be shifted from each other in advance so that the data can be separated or erased in accordance with a pulse from the data control portion 12. Thus, the communication data input/output, signal control, and so on, are executed by the foregoing operation between this appliance and other appliances connected to this appliance.

As described above, in the above embodiment, the input as well as output of each connection terminal is terminated with a line impedance. Accordingly, it is possible to perform data transfer between appliances having the same configuration, and by the extension connection to among appliances, it is possible to perform control on a terget appliance from a plurality of places, and it is possible to give information to a plurality of places.

As seen from the foregoing embodiment, the present invention has the following effects.
(1) Connection terminal is provided with a terminating circuit with line impedance in the input and output directions respectively so that connection between appliances can be made easily with a single signal line.
(2) By additionally providing a connection terminal and a terminating circuit in an appliance, it is possible to connect appliances not only in series but in parallel to each other.

## Claims

1. A bidirectional signal transfer apparatus capable of transferring information through a single signal line without using any carrier, said apparatus comprising a synchronizing separation portion (4) for separating a video signal into a video period and a video blanking period;
a data control portion (12) for storing information of said video and video blanking periods separated by said synchronizing separation portion;
a data processing portion (5) for erasing or exchanging the contents of a data signal multiplexed in the video blanking period of said video signal on the basis of said information stored in said data control portion, the phases of the data signal for two transfer directions being multiplexed and shifted from each other; and
said synchronizing separation portion and said data processing portion being provided as a set for each of two transfer directions, and said data processing portion being provided for the two transfer directions.

2. A bidirectional signal transfer apparatus according to claim 1, including
a first buffer means (1) for receiving a video signal with low impedance;
said synchronizing separation portion (4) being arranged to receive the output of said first buffer circuit; and
a second buffer means (8) arranged to receive the output signal of said data processing portion and to emit such output with predetermined impedance;
said synchronizing separation portion, said data processing portion, said first buffer means, and said second buffer means being provided as a set for each of two transfer directions.

3. A bidirectional signal transfer apparatus according to claim 1 or 2, in which said data control portion (12) is capable of outputting said information stored therein to the outside and inputting an external information thereinto.

4. A bidirectional signal transfer apparatus according to claim 1 or 2, in which execution of the erasing/exchanging of the contents of said video signal is determined mainly on the basis of the information of said video blanking period.

5. A bidirectional signal transfer apparatus according to claim 2, including
a clamping circuit (3) for clamping the output signal of said first buffer circuit; and
a data separating portion (6) for extracting a data portion in said video blanking period from an output of said clamping circuit; and wherein said synchronizing separation portion, said clamping circuit, said data separation portion, said data processing portion, said first buffer means, and said second buffer means are provided as a set for each of two transfer directions.

## Patentansprüche

1. Bidirektionale Signalübertragungsvorrichtung, welche in der Lage ist, Information über eine einzelne Signalleitung ohne Verwendung jeglichen Trägers zu übertragen, wobei die Vorrichtung aufweist:
ein synchronisierendes Trennglied (4) zum Trennen eines Videosignals in einen Videoabschnitt und einen Video-Überdeckungs-Abschnitt;
ein Datensteuerungsglied (12) zum Speichern von Information der Video- und der Video-Überdeckungs- Abschnitte, die durch das synchronisierende Trennglied getrennt wurden;
ein Datenverarbeitungsglied (5) zum Löschen oder Auswechseln der Inhalte eines im Video-Überdeckungs-Abschnitt des Videosignals gemultiplexten Datensignals auf Basis der im Datensteuerungsglied gespeicherten Information, wobei die Phasen des Datensignals für zwei Übertragungsrichtungen gemultiplext und gegeneinander verschoben sind; und
das synchronisierende Trennglied und das Datenverarbeitungsglied als Satz für jede der beiden Übertragungsrichtungen vorgesehen ist, und das Datensteuerungsglied für die beiden Übertragungsrichtungen vorgesehen ist.

2. Bidirektionale Signalübertragungsvorrichtung nach Anspruch 1, welche beinhaltet:
eine erste Pufferschaltung (1) zum Empfangen eines Videosignals mit niedriger Impedanz;
das synchronisierende Trennglied (4), welches angeordnet ist, um ein Ausgangssignal der ersten Pufferschaltung zu empfangen; und
eine zweite Pufferschaltung (8), welche angeordnet ist, um das Ausgangssignal des Datenverarbeitungsglieds zu empfangen und ein solches Ausgangssignal mit vorbestimmter Impedanz auszusenden;
wobei das synchronisierende Trennglied, das Datenverarbeitungsglied, die erste Pufferschaltung und die zweite Pufferschaltung als Satz für jede der beiden Übertragungsrichtungen vorgesehen sind.

3. Bidirektionale Signalübertragungsvorrichtung nach Anspruch 1 oder 2, bei der das Datensteuerglied (12) in der Lage ist, die darin gespeicherte Information nach außen auszugeben und eine externe Information in dieses einzugeben.

4. Bidirektionale Signalübertragungsvorrichtung nach Anspruch 1 oder 2, bei der das Ausführen des Löschens/Auswechselns der Inhalte des Videosignals hauptsächlich auf Basis der Information des Video-Überdeckungs-Abschnitts festgelegt wird.

5. Bidirektionale Signalübertragungsvorrichtung nach Anspruch 2, welche beinhaltet:
eine Clamping-Schaltung (3) zum Festhalten des Ausgangssignals der ersten Pufferschaltung; und
ein Datentrennglied (6) zum Extrahieren eines Datenabschnitts in dem Video-Überdeckungs-Abschnitt aus einem Ausgangssignal der Clamping-Schaltung; und wobei das synchronisierende Trennglied, die Clamping-Schaltung, das Datentrennglied, das Datenverarbeitungsglied, die erste Pufferschaltung und die zweite Pufferschaltung als Satz für jede der beiden Übertragungsrichtungen vorgesehen sind.

## Revendications

1. Dispositif de transfert bidirectionnel de signaux capable de transférer des informations à travers une unique ligne de signaux sans utilisation d'aucune porteuse, ledit dispositif comprenant:
une section (4) de séparation de signaux de synchronisation pour décomposer un signal vidéo en une période vidéo et une période de suppression vidéo;
une section (12) de commande de données pour mémoriser les informations desdites périodes vidéo et de suppression vidéo séparées par ladite section de séparation de signaux de synchronisation;
une section (5) de traitement de données pour effacer ou échanger le contenu d'un signal de données multiplexé dans la période de suppression vidéo dudit signal vidéo, sur la base desdites informations mémorisées dans ladite section de commande de données, les phases du signal de données pour deux directions de transfert étant multiplexées et décalées l'une par rapport à l'autre; et
ladite section de séparation de signaux de synchronisation et ladite section de traitement de données étant prévues sous forme d'ensemble pour chacune de deux directions de transfert et ladite section de commande de données étant prévue pour les deux directions de transfert.

2. Dispositif de transfert bidirectionnel de signaux selon la revendication 1, comprenant
un premier moyen tampon (1) pour recevoir un signal vidéo avec une basse impédance;
ladite section (4) de séparation de signaux de synchronisation étant agencée de façon à recevoir le signal de sortie dudit premier circuit tampon; et
un second moyen tampon (8) agencé de façon à recevoir le signal de sortie de ladite section de traitement de données et à émettre ledit signal de sortie avec une impédance prédéterminée;
ladite section de séparation de signaux de synchronisation, ladite section de traitement de données, ledit premier moyen tampon et ledit second moyen tampon étant prévus sous forme d'un ensemble pour chacune de deux directions de transfert.

3. Dispositif de transfert bidirectionnel de signaux selon la revendication 1 ou 2, dans lequel ladite section (12) de commande de données est capable de délivrer lesdites informations qui y sont mémorisées, et d'entrer des informations extérieures.

4. Dispositif de transfert bidirectionnel de signaux selon la revendication 1 ou 2, dans lequel l'exécution de l'effacement/échange du contenu dudit signal vidéo est déterminé principalement sur la base des informations de ladite période de suppression vidéo.

5. Dispositif de transfert bidirectionnel de signaux selon la revendication 2, comprenant
un circuit de verrouillage (3) pour verrouiller le signal de sortie dudit premier circuit tampon; et
une section (6) de séparation de données pour extraire, d'un signal de sortie dudit circuit de verrouillage, une partie contenant des informations dans ladite période de suppression vidéo;
et dans lequel ladite section de séparation de signaux de synchronisation, ledit circuit de verrouillage, ladite section de séparation de données, ladite section de traitement de données, ledit premier moyen tampon et ledit second moyen tampon sont prévus sous forme d'un ensemble pour chacune de deux directions de transfert.
